# EUROPEAN PATENT SPECIFICATION

(11) **EP 1 790 825 B1**
(45) Date of publication and mention of the grant of the patent: **28.10.2009**
(21) Application number: 06124951.2
(22) Date of filing: 28.11.2006
(51) Int. Cl.: F01D 5/28, F01D 25/00, C23C 4/08, C23C 28/00, C23C 30/00, C23C 4/12, C23C 4/02, C23C 4/18

(54) **Method for applying a bond coat and a thermal barrier coating over an aluminided surface**
Verfahren zum Auftragen einer Haftbeschichtung und einer Wärmedämmschicht auf einer aluminisierten Oberfläche
Procédé d' application d'un revêtement de liaison et un d' couche de barrière thermique sur une surface aluminée

(30) Priority: 29.11.2005 US 289725
(43) Date of publication of application: 30.05.2007
(73) Proprietor: GENERAL ELECTRIC COMPANY, Schenectady, NY 12345 (US)
(72) Inventor: Gupta, Bhupendra Kumar, Cincinnati, OH 45249 (US); Heidorn, Raymond W., Cincinnati, OH 45014 (US); Tomlinson, Thomas John, West Chester, OH 45069 (US); Das, Nripendra Nath, West Chester, OH 45069 (US)
(74) Representative: Gray, Thomas

(56) References cited:
- EP-A- 1 411 148
- EP-A2- 1 522 608
- US-A1- 2005 112 398
- US-A1- 2005 191 422
- US-A1- 2005 191 516
- US-B1- 6 887 595

## Description

This invention relates to the application of a protective coating to a surface and, more particularly, to the application of a coating having an aluminide layer, a bond coat, and a thermal barrier coating.

### BACKGROUND OF THE INVENTION

In an aircraft gas turbine (jet) engine, air is drawn into the front of the engine, compressed by a shaft-mounted compressor, and mixed with fuel. The mixture is burned, and the hot exhaust gases are passed through a turbine mounted on the same shaft. The flow of combustion gas turns the turbine by impingement against an airfoil section of the turbine blades, which turns the shaft and provides power to the compressor and fan. In a more complex version of the gas turbine engine, the compressor and a high-pressure turbine are mounted on one shaft, and the fan and low-pressure turbine are mounted on a separate shaft. The hot exhaust gases flow from the back of the engine, driving it and the aircraft forward.

The hotter the combustion and exhaust gases, the more efficient is the operation of the jet engine. There is thus an incentive to raise the combustion and exhaust-gas temperatures. The maximum temperature of the combustion gases is normally limited by the materials used to fabricate the turbine vanes and turbine blades of the turbine, upon which the hot combustion gases impinge. In current engines, the turbine vanes and blades are made of nickel-based superalloys, and can operate at temperatures of up to about 1900-2150°F.

Many approaches have been used to increase the operating temperature limits of turbine blades, turbine vanes, stationary shrouds, and other hot-section components to their current levels. For example, the composition and processing of the base materials themselves have been improved, and a variety of solidification techniques have been developed to take advantage of oriented grain structures and single-crystal structures. Physical cooling techniques may also be used.

In yet another approach, thermal barrier coatings are applied to the surface of the substrate to inhibit the oxidation and corrosion of the substrate and insulate the substrate, thereby permitting the substrate material to be used at a higher temperature than would otherwise be possible. The most widely used coatings are aluminum-rich layers whose surfaces oxidize to an aluminum oxide scale to inhibit further oxidation and corrosion, with an overlying ceramic layer as disclosed for example in US 2005/0191516 A1.

Protective layers continue to be used to protect substrates, but there is always a need for further improvements to increase the operating temperatures of the coated substrates and to prolong their service lives. The present invention fulfills this need, and further provides related advantages.

### SUMMARY OF THE INVENTION

An embodiment of the present invention provides a method for depositing a multilayer coating onto a surface to protect the surface against oxidation and corrosion damage, and also to insulate the surface. The present approach also provides excellent adhesion of the coating to the surface. This technique may be used in a wide variety of applications such as turbine blades, turbine vanes (nozzles), stationary shrouds, and other aircraft and non-aircraft articles. It may be used with monolithic materials such as nickel-base superalloys, and with composite materials.

In an embodiment of the invention, a method for depositing a multilayer coating on a surface, comprises the steps of providing a substrate, depositing a diffusion aluminide coating onto the substrate, and roughening a surface of the diffusion aluminide coating to form a roughened surface of the diffusion aluminide coating. The method further includes depositing by wire-arc spray an overlay bond coat overlying and contacting the roughened surface of the diffusion aluminide coating, and applying a ceramic thermal barrier coating overlying and contacting the bond coat.

Preferably, the substrate is a nickel-base superalloy or cobalt-base alloy substrate that is a component of a gas turbine engine. The diffusion-aluminide coating is preferably deposited by vapor phase aluminiding. The step of roughening is preferably accomplished by lightly grit blasting the surface of the diffusion aluminide coating.

The step of depositing by wire-arc spray is preferably accomplished by operating the wire-arc spray deposition apparatus using a pressure of an argon atomizing gas at from about 60 to about 120 pounds per square inch, an arc current of from about 80 to about 120 amperes, a wire feed rate of from about 3 to about 10 pounds per hour, and a constant DC voltage of about 30 +/- 5 volts. The overlay bond coat is preferably a MCrAlX overlay bond coat of the NiCrAlY type, most preferably having a nominal composition in weight percent of about 20-25 percent chromium, about 9-11 percent aluminum, about 0.8-1.2 percent yttrium, balance nickel.

The ceramic thermal barrier coating is preferably a yttria-stabilized zirconia thermal barrier coating.

It has not been possible to reliably deposit an overlay bond coat over a diffusion aluminide coating on a substrate, using prior practices. If the overlay bond coat is deposited using air plasma spray or related techniques, the NiCrAlY overlay bond coat does not adhere well to the aluminide coating. Consequently, in service the ceramic thermal barrier coating does not adhere well to the substrate, causing premature failures. The present approach of applying the NiCrAlY overlay bond coat by a wire-arc spray overcomes these shortcomings, producing a well-adhered bond coat overlying the diffusion aluminide layer. The ceramic thermal barrier coating adheres well to the bond coat, so that the thermal barrier coating adheres well to the substrate. The combination of the diffusion aluminide coating and the thermal barrier coating system with its overlay bond coat and the ceramic thermal barrier coating therefore provides good oxidation and corrosion resistance, as well as good thermal insulation, for the underlying substrate.

Other features and advantages of the present invention will be apparent from the following more detailed description of the preferred embodiment, taken in conjunction with the accompanying drawings, which illustrate, by way of example, the principles of the invention. The scope of the invention is not, however, limited to this preferred embodiment.

### BRIEF DESCRIPTION OF THE DRAWINGS

Figure 1 is a block flow diagram of an approach for practicing the invention;
Figure 2 is a perspective view of a turbine blade;
Figure 3 is a schematic enlarged elevation sectional view of the turbine blade of Figure 2, taken on line 3-3;
Figure 4 is a schematic drawing of a wire-arc spray apparatus; and
Figure 5 is a graph comparing the tensile strengths of specimens prepared using different approaches.

### DETAILED DESCRIPTION OF THE INVENTION

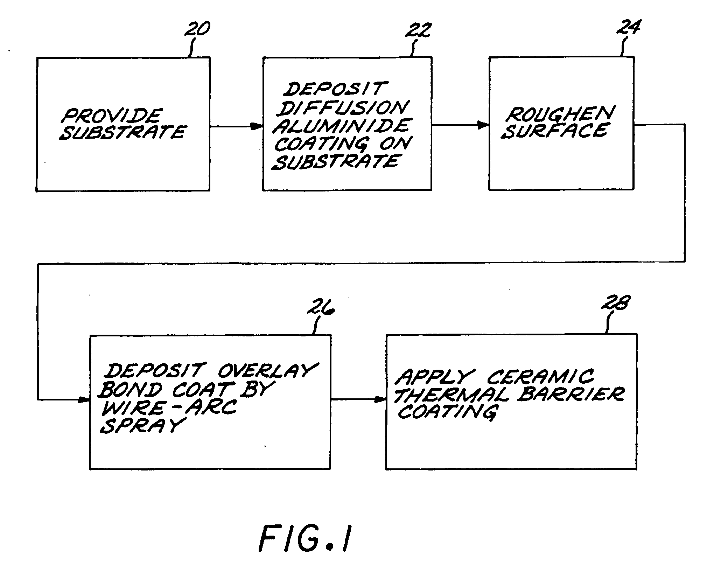

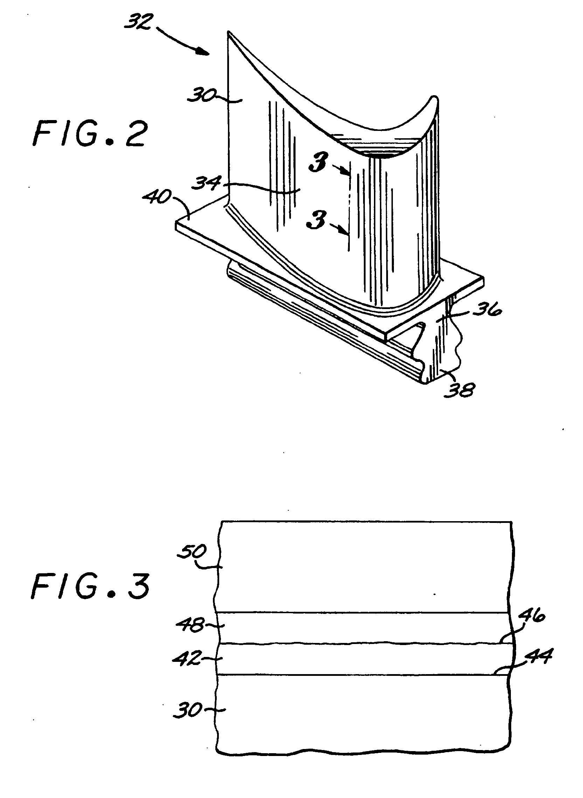

Figure 1 depicts a method for depositing a multilayer component on the surface of a component of a gas turbine engine. A gas turbine component substrate is furnished, numeral 20. Figure 2 illustrates one embodiment of a gas turbine component substrate 30, in the preferred case a turbine blade 32. Other components of gas turbine engines, such as turbine vanes and stationary shrouds, may be utilized with the present invention, as can other substrates more generally.

The gas turbine blade 32 has an airfoil 34 against which the flow of hot combustion gas impinges during service operation, a downwardly extending shank 36, and an attachment extending from the shank 36 in the form of a dovetail 38 which attaches the gas turbine blade 20 to a gas turbine disk (not shown) of the gas turbine engine. A platform 40 extends transversely outwardly at a location between the airfoil 34 and the shank 36 and dovetail 38.

The substrate 30 that defines the shape of the gas turbine blade 32 is formed of any operable material, but is preferably a nickel-base superalloy. As used herein, "nickel-base" means that the composition has more nickel present than any other element. The nickel-base superalloys are typically of a composition that is strengthened by the precipitation of gamma-prime phase or a related phase. Nickel-base superalloys of particular interest at this time include Rene^{™} N5, having a nominal composition in weight percent of about 7.5 percent cobalt, about 7.0 percent chromium, about 1.5 percent molybdenum, about 5 percent tungsten, about 3 percent rhenium, about 6.5 percent tantalum, about 6.2 percent aluminum, about 0.15 percent hafnium, about 0.05 percent carbon, about 0.004 percent boron, about 0.01 percent yttrium, balance nickel and minor elements; HS 188, having a nominal composition in weight percent of about 40 percent cobalt, about 22 percent chromium, about 22 percent nickel, about 14.5 percent tungsten, about 0.07 percent lanthanum, balance minor elements; and Hastelloy^{R} X, having a nominal composition in weight percent of 22 percent chromium, 18 percent iron, 9 percent molybdenum, 1.5 percent cobalt, 0.6 percent tungsten, 0.10 percent carbon, maximum 1 percent manganese, maximum 1 percent silicon, maximum 0.008 percent boron, balance nickel and minor elements, although the use of the present invention is not limited to these alloys.

A diffusion aluminide coating 42 is deposited onto a surface 44 of the substrate 30, step 22 of Figure 1. Figure 3, which is not drawn to scale, depicts the diffusion aluminide coating 42 and other coating layers that are subsequently deposited upon the substrate 30. The diffusion aluminide coating 42 is preferably deposited by vapors-phase aluminiding. Vapor-phase aluminiding is a known procedure in the art, and any form of vapor-phase aluminiding may be used. See, for example, U.S. Patents 6,326,057; 6,332,926; and 6,844,086, whose disclosures are incorporated by reference. In a preferred form, baskets of aluminum-containing pellets are positioned close to the substrate 30 to be vapor-phase aluminided, in a retort. The retort containing the baskets and the substrate 30 is heated in an argon atmosphere at a heating rate of about 50°F per minute to a temperature of about 1975°F +/- 25°F, held at that temperature for about 3 hours +/- 15 minutes, during which time an aluminum-containing layer is deposited onto the substrate 30, and then slow cooled to about 250°F, and thereafter cooled to room temperature. These times and temperatures may be varied to alter the thickness of the aluminum-containing coating 42. As the aluminum is deposited, it interdiffuses with the material of the substrate 30 at the elevated deposition temperature, forming the diffusion aluminide coating 42. The diffusion aluminide coating 42 contains aluminum, elements from the material of the substrate 30, and possibly alloying elements that are co-deposited with the aluminum (e.g., chromium) or deposited prior to the aluminum (e.g., a precious metal such as platinum). The diffusion-aluminide coating 42 is typically from about 0.001 inch to about 0.004 inch thick. It is preferred that the diffusion aluminide coating 42 not be heat treated after deposition.

After cooling, an exposed surface of the diffusion aluminide coating 42 is slightly roughened to form a roughened surface 46 of the diffusion aluminide coating 42, step 24 of Figure 1. The roughening is preferably performed by light grit blasting of the as-deposited surface of the diffusion aluminide coating 42. The roughened surface 46 preferably has a roughness of from about 80 Ra to about 150 Ra.

An overlay bond coat 48 is deposited by wire-arc spray onto the roughened surface 46, step 26 of Figure 1. The overlay bond coat 48 overlies and contacts the roughened surface 46 of the diffusion aluminide coating 42. The overlay bond coat 48 is preferably an MCrAlX overlay bond coat of the NiCrAlY family. The terminology "MCrAlX" and "NiCrAlY" are shorthand terms of art for a variety of families of overlay bond coats that may be employed as environmental coatings or bond coats in thermal barrier coating systems. In the present application, the NiCrAlY most preferably has a nominal composition in weight percent of 20-25 percent chromium, 9-11 percent aluminum, 0.8-1.2 percent yttrium, balance nickel. The preferred thickness of the overlay bond coat 48 is from about 0.001 to about 0.010 inch, most preferably about 0.008 inch.

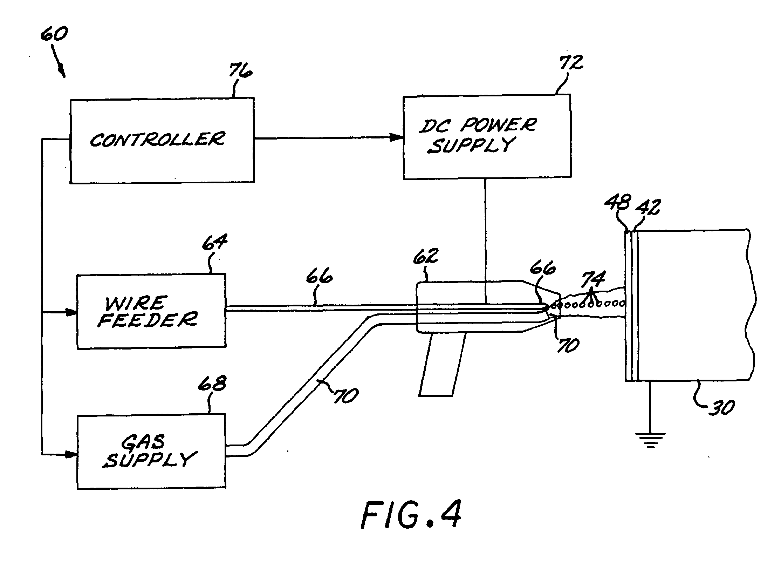

A key feature is the deposition of the overlay bond coat 48 by wire-arc spraying. Other application approaches that were tried were not successful in achieving good adhesion between the overlay bond coat 48 and the diffusion-aluminide coating 42. Figure 4 schematically depicts a wire-arc spray deposition apparatus 60. The wire-arc spray deposition apparatus 60 includes a deposition gun 62. A wire feeder 64 introduces a flow of a wire 66 made of the composition of the overlay bond coat 48 into the deposition gun 62. A gas supply 68 introduces a flow of an inert atomizing gas 70 such as argon into the deposition gun 62. A DC voltage is applied to the wire 66 in the deposition gun 62 by a DC power supply 72. The wire 66 is vaporized by the combined action of the DC voltage and the atomizing gas 70, and a flow 74 of the vaporized wire material is directed against the substrate 30 to form the overlay bond coat 48. A controller 76 controls the operation of the DC power supply 72, the wire feeder 64, and the gas supply 68, and may also control the positioning and movement of the deposition gun 62 relative to the substrate 30.

Any operable deposition parameters may be used. The best results have been obtained by operating the wire-arc spray deposition apparatus 60 using a pressure of an argon atomizing gas 70 of from 60 to 120 pounds per square inch, a wire feed rate of from 3 to 10 pounds per hour, a constant DC voltage of 30 +/- 5 volts, and an arc current of from 80 to 120 amperes.

A ceramic thermal barrier coating 50 is applied overlying and contacting the bond coat 48, step 28 of Figure 1. The ceramic thermal barrier coating 50 preferably is a yttria-stabilized zirconia (YSZ) thermal barrier coating 50 having a composition of from about 2 to about 12 weight percent yttria, balance zirconia. The ceramic thermal barrier coating 50 is preferably from about 0.003 inch to about 0.010 inch thick. The ceramic thermal barrier coating 50 is preferably deposited by air plasma spray. U.S. Patent 6,607,611, whose disclosure is incorporated by reference, discusses the structure and deposition of such thermal barrier coatings 50.

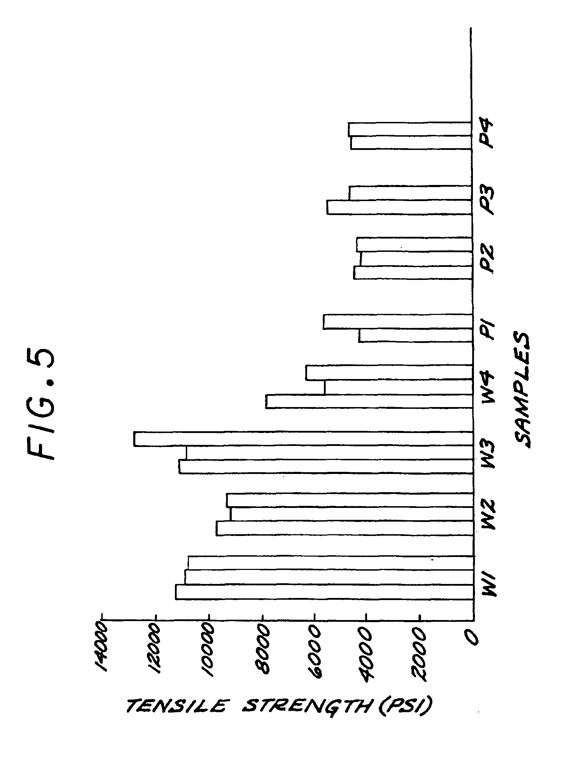

The present approach has been reduced to practice using the preferred parameters for the wire-arc deposition process for the overlay bond coat. Figure 5 depicts the results of the testing, and also comparative results for specimens that are similar except that the overlay bond coat was deposited by a more-conventional approach of air plasma spraying. Two or three specimens for each processing condition were prepared, and the results for each of the tests are shown. The substrate in all cases was IN 718 alloy. The "W" specimens were prepared using the wire-arc deposition process for the overlay bond coat, and the "P" specimens were prepared using the plasma spray process for the bond coat. In each group, the "1" specimen was prepared using a low activity vapor-phase aluminiding process followed by heat treating of the aluminide coating, the "2" specimen was prepared using a standard vapor-phase aluminiding process without heat treating the aluminide coating, the "3" specimen was prepared using a low activity vapor-phase aluminiding process with no heat treating of the aluminide coating, and the "4" specimen was prepared using the standard vapor-phase aluminiding process followed by heat treating of the aluminide coating. The specimens prepared using wire-arc deposition for the overlay bond coat exhibited, in general, superior performance to those prepared using plasma spraying for the overlay bond coat. The best performance of the specimens prepared using wire-arc deposition was achieved using low-activity vapor phase aluminiding, without heat treatment of the aluminide coating.

## Claims

1. A method for depositing a multilayer coating on a surface, comprising the steps of
providing a substrate (30);
depositing a diffusion aluminide coating (42) onto a surface (44) of the substrate (30);
roughening a surface of the diffusion aluminide coating (42) to form a roughened surface (46) of the diffusion aluminide coating (42);
depositing by wire-arc spray an overlay bond coat (48) overlying and contacting the roughened surface (46) of the diffusion aluminide coating (42); and
applying a ceramic thermal barrier coating (50) overlying and contacting the overlay bond coat (48).

2. The method of claim 1, wherein the step of providing the substrate (30) includes the step of
providing a nickel-base superalloy substrate (30).

3. The method of claim 1, wherein the step of providing the substrate (30) includes the step of
providing the substrate (30) that is a component of a gas turbine engine.

4. The method of claim 1, wherein the step of depositing the diffusion aluminide coating (42) includes the step of
depositing the diffusion aluminide coating (42) by vapor phase aluminiding.

5. The method of claim 1, wherein the step of roughening includes the step of
grit blasting the surface of the diffusion aluminide coating (42).

6. The method of claim 1, wherein the step of depositing by wire-arc spray includes the step of
operating a wire-arc spray deposition apparatus (60) using
a pressure of an argon atomizing gas of from about 60 to about 120 pounds per square inch,
an arc current of from about 80 to about 120 amperes,
a wire feed rate of from about 3 to about 10 pounds per hour, and
a constant DC voltage of about 30 +/- 5 volts.

7. The method of claim 1, wherein the step of depositing by wire-arc spray includes the step of
depositing a NiCrAlY overlay bond coat (48).

8. The method of claim 1, wherein the step of depositing by wire-arc spray includes the step of
depositing a NiCrAlY overlay bond coat having a nominal composition in weight percent of 20-25 percent chromium, 9-11 percent aluminum, 0.8-1.2 percent yttrium, balance nickel.

9. The method of claim 1, wherein the step of applying the ceramic thermal barrier coating (50) includes the step of
applying a yttria-stabilized zirconia thermal barrier coating (50).

## Patentansprüche

1. Verfahren zum Abscheiden einer mehrschichtigen Beschichtung auf einer Oberfläche, mit den Schritten:
Bereitstellen eines Substrats (30);
Abscheiden einer Diffusionsaluminidbeschichtung (42) auf einer Oberfläche (44) des Substrats (30);
Aufrauen einer Oberfläche der Diffusionsaluminidbeschichtung (42), um eine aufgeraute Oberfläche (46) der Diffusionsaluminidbeschichtung (42) zu erzeugen;
Abscheiden einer Überzugshaftschicht (48) mittels Drahtlichtbogenspritzen, die über der aufgerauten Oberfläche (46) der Diffusionsaluminidbeschichtung (42) liegt und damit in Kontakt steht; und
Aufbringen einer keramischen Wärmedämmbeschichtung (50), die über der Überzugshaftschicht (48) liegt und mit dieser in Kontakt steht.

2. Verfahren nach Anspruch 1, wobei der Schritt der Bereitstellung des Substrats (30) den Schritt beinhaltet:
Bereitstellen eines Superlegierungssubstrats (30) auf Nickelbasis.

3. Verfahren nach Anspruch 1, wobei der Schritt der Bereitstellung des Substrats (30) den Schritt beinhaltet:
Bereitstellen des Substrats (30), das eine Komponente einer Gasturbine ist.

4. Verfahren nach Anspruch 1, wobei der Schritt der Abscheidung der Diffusionsaluminidbeschichtung (42) den Schritt beinhaltet:
Abscheiden der Diffusionsaluminidbeschichtung (42) durch Dampfphasenaluminidierung.

5. Verfahren nach Anspruch 1, wobei der Schritt der Aufrauung den Schritt einer Sandbestrahlung der Oberfläche der Diffusionsaluminidbeschichtung (42) beinhaltet.

6. Verfahren nach Anspruch 1, wobei der Schritt der Abscheidung durch Drahtlichtbogenspritzen den Schritt beinhaltet:
Betreiben einer Drahtlichtbogen-Spritzabscheidevorrichtung (60) unter Verwendung:
eines Druckes eines Argonzerstäubungsgases von etwa 4,14 bis 8,83 bar (60 bis 120 psi),
eines Lichtbogenstroms von etwa 80 bis etwa 120 Ampere,
einer Drahtzuführungsrate von etwa 1,36 kg bis etwa 4,54 kg (etwa 3 pound bis etwa 10 pound pro Stunde, und
eine Konstantgleichspannung von etwa 30 ± 5 Volt.

7. Verfahren nach Anspruch 1, wobei der Schritt der Abscheidung durch Drahtlichtbogenspritzen den Schritt beinhaltet:
Abscheiden einer NiCrAlY-Überzugshaftschicht (48).

8. Verfahren nach Anspruch 1, wobei der Schritt der Abscheidung durch Drahtlichtbogenspritzen den Schritt beinhaltet:
Abscheiden einer NiCrAlY-Überzugshaftschicht mit einer nominellen Zusammensetzung in Gewichtsprozent von 20 bis 25 Prozent Chrom, 9 bis 11 Prozent Aluminium, 0,8 bis 1,2 Prozent Yttrium und dem Rest Nickel.

9. Verfahren nach Anspruch 1, wobei der Schritt der Aufbringung der keramischen Wärmedämmbeschichtung (50) den Schritt beinhaltet:
Aufbringen einer Yttriumoxid-stabilisierten Zirkoniumoxid-Wärmedämmbeschichtung (50).

## Revendications

1. Procédé pour déposer un revêtement multicouche sur une surface, comprenant les étapes consistant à :
fournir un substrat (30) ;
déposer un revêtement d'aluminiure de diffusion (42) sur une surface (44) du substrat (30) ;
dégrossir une surface du revêtement d'aluminiure de diffusion (42) pour former une surface rugosifiée (46) du revêtement d'aluminiure de diffusion (42) ;
déposer par projection à l'arc de fil une couche d'accrochage recouvrante (48) qui recouvre et établit un contact avec la surface rugosifiée (46) du revêtement d'aluminiure de diffusion (42) ; et
appliquer un revêtement formant barrière thermique en céramique (50) qui recouvre et établit un contact avec la couche d'accrochage recouvrante (48).

2. Procédé selon la revendication 1, dans lequel l'étape de fourniture du substrat (30) comprend l'étape consistant à fournir un substrat en superalliage à base de nickel (30).

3. Procédé selon la revendication 1, dans lequel l'étape de fourniture du substrat (30) comprend l'étape consistant à fournir le substrat (30) qui est un composant d'un moteur à turbine à gaz.

4. Procédé selon la revendication 1, dans lequel l'étape de dépôt du revêtement d'aluminiure de diffusion (42) comprend l'étape consistant à déposer le revêtement d'aluminiure de diffusion (42) par aluminisation en phase vapeur.

5. Procédé selon la revendication 1, dans lequel l'étape de dégrossissage comprend l'étape consistant à grenailler la surface du revêtement d'aluminiure de diffusion (42).

6. Procédé selon la revendication 1, dans lequel l'étape de dépôt par projection à l'arc de fil comprend l'étape consistant à faire fonctionner un appareil de dépôt par projection à l'arc de fil (60) en utilisant :
une pression d'un gaz d'atomisation à l'argon d'environ 413 à environ 827 kPa (60 à 120 PSI), un courant d'arc d'environ 80 à environ 120 ampères,
une vitesse d'avance du fil d'environ 1,360 à 4,536 kg par heure (3 à 10 livres par heure), et
une tension continue constante d'environ 30 ± 5 volts.

7. Procédé selon la revendication 1, dans lequel l'étape de dépôt par projection à l'arc de fil comprend l'étape consistant à déposer une couche d'accrochage recouvrante au NiCrAlY (48).

8. Procédé selon la revendication 1, dans lequel l'étape de dépôt par projection à l'arc de fil comprend l'étape consistant à déposer une couche d'accrochage recouvrante au NiCrAlY ayant une composition nominale en pourcentages en poids de 20 à 25 pour cent de chrome, 9 à 11 pour cent d'aluminium, 0,8 à 1,2 pour cent d'yttrium et le complément de nickel.

9. Procédé selon la revendication 1, dans lequel l'étape d'application du revêtement formant barrière thermique en céramique (50) comprend l'étape consistant à appliquer un revêtement formant barrière thermique à la zircone stabilisée à l'oxyde d'yttrium (50).
